(19) **Europäisches Patentamt / European Patent Office / Office européen des brevets**

(11) **EP 4 235 214 B1**

(12) **EUROPEAN PATENT SPECIFICATION**

(45) Date of publication and mention
of the grant of the patent:
**21.05.2025 Bulletin 2025/21**

(21) Application number: **22158998.9**

(22) Date of filing: **25.02.2022**

(51) International Patent Classification (IPC):
**G01S 7/497** (2006.01)   **G01S 17/89** (2020.01)

(52) Cooperative Patent Classification (CPC):
**G01S 7/497; G01S 17/89; Y02A 90/10**

(54) **LIDAR SNOWFALL SIMULATION METHOD AND SYSTEM FOR ROBUST 3D OBJECT DETECTION**

SCHNEEFALLSIMULATIONSVERFAHREN FÜR EINEN LIDAR SENSOR UND SYSTEM ZUR ROBUSTEN 3D-OBJEKTDETEKTION

PROCÉDÉ DE SIMULATION DE CHUTE DE NEIGE POUR UN CAPTEUR LIDAR ET SYSTÈME ROBUSTE DE DÉTECTION D'OBJET 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietors:
• **TOYOTA JIDOSHA KABUSHIKI KAISHA**
  **Toyota-shi, Aichi-ken, 471-8571 (JP)**
• **ETH Zurich - The Swiss Federal Institute of Technology Zurich**
  **8092 Zurich (CH)**

(72) Inventors:
• **ABBELOOS, Wim**
  **1140 Brussels (BE)**
• **HAHNER, Martin**
  **8092 Zurich (CH)**
• **SAKARIDIS, Christos**
  **8092 Zurich (CH)**
• **FISHER, Yu**
  **8092 Zurich (CH)**
• **DAI, Dengxin**
  **8092 Zurich (CH)**
• **VAN GOOL, Luc**
  **8092 Zurich (CH)**

(74) Representative: **Cabinet Beau de Loménie**
**158, rue de l'Université**
**75340 Paris Cedex 07 (FR)**

(56) References cited:
**CN-A- 112 163 280      US-A1- 2018 275 658**
**US-A1- 2021 339 738**

• **KILIC VELAT ET AL: "Lidar Light Scattering Augmentation (LISA): Physics-based Simulation of Adverse Weather Conditions for 3D Object Detection", 14 July 2021 (2021-07-14), XP055946616, Retrieved from the Internet <URL:https://arxiv.org/abs/2107.07004> [retrieved on 20220727]**
• **CARRILLO JUSTIN ET AL: "Using Physics-Based M&S for Training and Testing Machine Learning Algorithms", 14 March 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 445 - 455, ISBN: 978-3-319-10403-4, XP047504560**

## Description

The present disclosure relates to the field of data simulation for 3D object detection.

## BACKGROUND ART

Autonomous vehicles and related systems utilize various computer-operated technologies for determining conditions around the vehicle. For instance, 3D object detection is a central task for applications such as autonomous driving, in which the system needs to localize and classify surrounding traffic agents. One technology commonly applied to this operation is LiDAR, which stands for **L**ight **D**etection **A**nd **R**anging. LiDAR uses lasers to create 3D representations of the surrounding environment by emitting pulsed light beams and capturing their reflection via receivers. These systems can be heavily impacted by adverse weather conditions due to the impact that precipitation and other environmental effects can have on the light beams. Further difficulties arise when attempting to collect and annotate training data in this type of setting.

Reference 1 [KILIC, Velat, HEGDE, Deepti, SINDAGI, Vishwanath, et al. "Lidar light scattering augmentation (LISA): Physics-based simulation of adverse weather conditions for 3D object detection". arXiv preprint arXiv:2107.07004, 2021] discloses a physics-based approach to simulate adverse weather conditions on existing lidar-based datasets. In particular, Reference 1 discloses a calculation of the received power based on a scatterer with maximum reflected power.

Reference 2 [US 2018/275658] discloses a system generating synthetic data by introducing modifications to sensor data. Such system simulates precipitation in an environment by attenuating reflecting signals from a LIDAR sensor image of the environment on a clear day to account for the precipitation.

Reference 3 [US 2021/339738] discloses methods and systems for operating an on-vehicle LIDAR sensor.

Reference 4 [CARRILLO, Justin, GATES, Burhman, MONROE, Gabe, et al. "Using physics-based M&S for training and testing machine learning algorithms", In : International Conference on Modelling and Simulation for Autonomous Systems. Springer, Cham, 2018. p. 445-455] discloses simulating snow and dust in a simulation software based on a particle system. The simulation software provides diverse physics-based datasets that maximize machine learning by including high variation and randomization within the simulation to increase entropy within the dataset.

Reference 5 [CN 112 163 280 A] discloses a method for simulating an autonomous driving scenario such various road scenes and weather conditions.

## SUMMARY

According to an aspect of the present invention a computer-implemented method for simulating the effect of snowfall on LiDAR point clouds is provided, as set out in the appended set of claims.

Since adverse-weather data is difficult to collect, and thus adverse weather samples are rare and well underrepresented. This method allows for the generation of weather-based LiDAR data by simulating snowfall on real clear-weather LiDAR point clouds. This physically based simulation is realistic enough to relieve the need for real snowy training samples.

In an example, the method further comprises utilizing the partially synthetic snow LiDAR data as training data for optimizing 3D object detection methods in order to train the 3D object detection methods to better discriminate between snow particles and target objects in a real environment.

Object detection models trained using this method for generating training data with simulated snow may consistently achieve significant performance gains over baseline models trained only on clear weather and competing simulation methods.

According to the invention, simulating the effect of snowfall on the LiDAR point cloud data comprises sampling snow particles in 2D space for each scanning layer of the LiDAR sensor.

In an example, the snow particles are rendered as opaque spheres.

In an example, the method further comprises selecting a snowfall rate, wherein said snowfall rate determines the size and amount of the snow particles. This allows data to be produced that simulates snowfall of varying intensity, such as light snowfall and heavy snowfall.

In an example, the sampling is configured to obey the exclusion principle that no two snow particles intersect with each other.

In an example, augmenting the LiDAR point cloud data comprises using induced geometry to modify an attribute for each LiDAR beam.

In an example, using induced geometry comprises computing for each LiDAR beam the set of particles that intersect with it and derive the angle of the beam cross-section that is reflected by each particle, taking occlusions into account in order to produce an impulse response of the linear system in the presence of snowfall that allows an analytical calculation of the received power at the receiver.

An aspect of the present invention is directed toward a training dataset configured to be used for optimizing 3D object detection methods, produced by the method disclosed.

An aspect of the present invention is directed toward a system for generating a partially synthetic snowy LiDAR dataset, as defined in claim 8.

In an example, the system further comprises a pulse emitter and a receiver, wherein the pulse emitter is configured to emit LiDAR beams and the receiver is configured to detect a reflected LiDAR beams.

In an example, the controller is configured to generate a LiDAR dataset containing real LiDAR point cloud data for a clear weather environment based on attributes about the reflections of said LiDAR beam that are detected by the receiver.

In an example, the system is configured to generate a LiDAR dataset containing real LiDAR point cloud data for a clear weather environment based on attributes of the reflections of the LiDAR beam.

In an example, the system is configured to utilize the partially synthetic snow LiDAR data as training data for optimizing 3D object detection methods in order to train the 3D object detection methods to better discriminate between snow particles and target objects in a real environment.

According to the invention, the system is configured to simulate the effect of snowfall on the LiDAR point cloud data comprises sampling snow particles in 2D space for each scanning layer of the LiDAR sensor.

In an example, the system is configured to render the snow particles as opaque spheres.

Other examples are provided herein.

## BRIEF DESCRIPTION OF THE DRAWINGS

The disclosure may be more completely understood in consideration of the following detailed description of aspects of the disclosure in connection with the accompanying drawings, in which:

Fig. 1 shows an exemplary LiDAR system.
Fig. 2 shows an exemplary method for producing a partially synthetic snow LiDAR data.
Fig. 3A shows an exemplary LiDAR system operation with simulated snowfall.
Fig. 3B shows an exemplary graph demonstrating reflected echoes of a LiDAR beam.
Fig. 4 shows an exemplary code for producing aspects of a partially synthetic snow LiDAR data.
Fig. 5 shows an exemplary code for snowflake sampling.
Fig. 6 shows an exemplary code for computing LiDAR beam occlusions.
Fig. 7 shows an exemplary input and output of a method for producing a partially synthetic snow LiDAR data.
Figs. 8A-C show an exemplary snowy scene for the purposes of training a 3D object detection model.
Fig. 9 shows a system for producing a partially synthetic snow LiDAR data.

The term "exemplary" is used in the sense of "example", rather than "ideal". While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

## DETAILED DESCRIPTION

As used in this disclosure and the appended claims, the singular forms "a", "an", and "the" include plural referents unless the content clearly dictates otherwise. As used in this disclosure and the appended claims, the term "or" is generally employed in its sense including "and/or" unless the content clearly dictates otherwise.

The following detailed description should be read with reference to the drawings. The detailed description and the drawings, which are not necessarily to scale, depict illustrative aspects and are not intended to limit the scope of the disclosure. The illustrative aspects depicted are intended only as exemplary.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (for example, "between" versus "directly between," "adjacent" versus "directly adjacent," etc.).

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

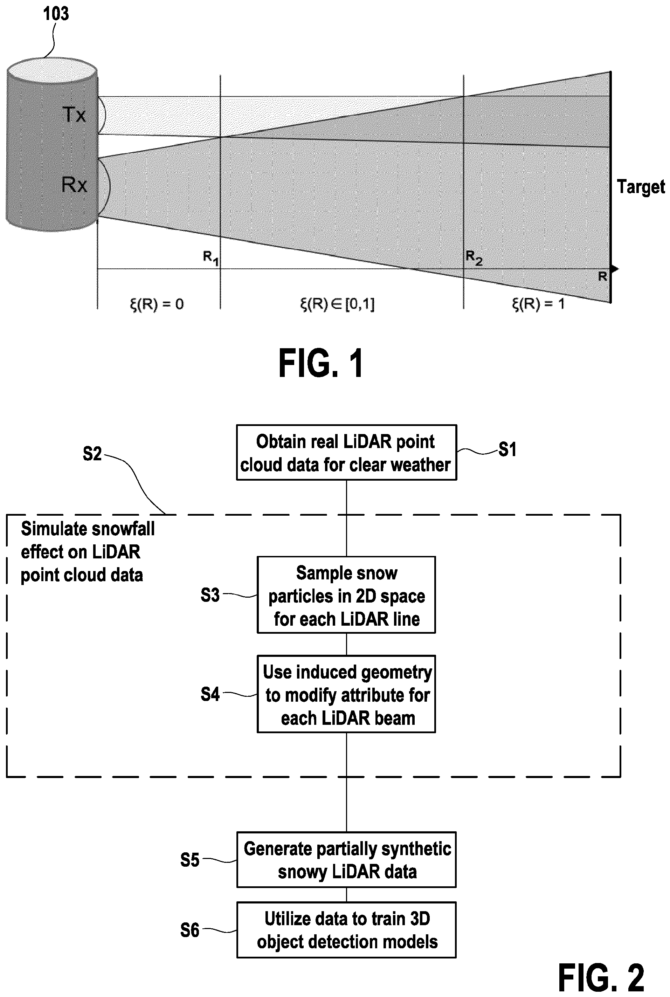

A LiDAR system 103, such as the one shown in FIG. 1, may include a pulse emitter Tx and a receiver Rx. The pulse emitter Tx may include one or more light sources for transmitting light or photon beams. Examples of suitable light sources include lasers, laser diodes, light emitting diodes, organic light emitting diodes, or the like. For instance, the pulse emitter may include one or more visible and/or non-visible laser sources. In at least some embodiment, light source includes one or more non-visible laser sources, such as a near-infrared (NIR), short-wave infrared (SWIR), mid-wave infrared (MWIR), long-wave infrared (LWIR) laser, or the like. A light source may provide continuous or pulsed light beams of a predetermined frequency, or range of frequencies. The provided light beams may be coherent light beams. In an example, the pulse emitters Tx may be an array synchronized near field infrared pulse emitters.

The receivers Rx may include one or more photon-sensitive, or photon-detecting, arrays of sensor pixels. An array of sensor pixels may be configured to detect continuous or pulsed light beams on a constant or sporadic basis. The array of pixels may be a one dimensional-array or a two-dimensional array. The pixels may include single photon avalanche diodes (SPADs) or other photo-sensitive elements that avalanche upon the illumination of one or a few incoming photons. The pixels may have ultra-fast response times in detecting a single or a few photons that are on the order of a few nanoseconds. The pixels may be sensitive to the frequencies emitted or transmitted by pulse emitter Tx and relatively insensitive to other frequencies. In an example, the receivers Rx may be avalanche photodiodes (APDs).

During operation of the LiDAR system 103, the pulse emitters Tx may emit a LiDAR beam with power $P_0$. The LiDAR beam is reflected by a solid scene object, often referred to as target, that has a reflectivity $\rho_0$. The LiDAR beam may be captured by the receiver Rx. Attributes of the recovered LiDAR beam may be detected by the receiver Rx, such as the time delay $\tau$ of the captured echo and its corresponding power $P_R$. The object distance R of the target may be calculated by applying $R = c\tau$, where c is the speed of light. A 3D position [x, y, z] of the target relative to the LiDAR system 103 may be further determined from this information, such as by using the direction in which the LiDAR beam with power $P_0$ was emitted in coordination with the object distance R.

By collating a dataset of bounced LiDAR beams, wherein each bounced LiDAR beam represents a target data point, a LiDAR point cloud may be produced that is embodies a virtual representation of the surroundings of the LiDAR system 103. An increase in the number of points within the LiDAR point cloud may represent an increase of the fidelity between the representation and the "real-world" surroundings of the LiDAR system 103. This fidelity is also affected by the medium that the LiDAR beams pass through. For instance, the presence of scattering particles, such as snow, rain, fog, etc., may decrease the fidelity of the LiDAR point cloud. Therefore, the LiDAR system 103 may optimally produce a LiDAR point cloud dataset for a clear weather environment.

A process for producing a linear model for pulse propagation in the presence of scattering particles, such as the process shown in FIG. 2, may be described.

In step S1, a LiDAR point cloud dataset is obtained. The LiDAR point cloud dataset represents a LiDAR dataset containing LiDAR point cloud data for a clear weather environment that has been collected by a LiDAR system 103 in a real environment. For example, the LiDAR point cloud dataset may be a dataset collected by the LiDAR system 103 previously described for a clear weather environment in the real world.

In step S2, the snowfall effect on the LiDAR point cloud data is simulated. This includes step S3, in which a sample of snow particles in a given space is produced. The snow particles is sampled in 2D space for each LiDAR beam of the dataset. Snowfall may be simulated that is based on a sampling of snow particles. The sampled snow particles may be modeled as spheres, and more specifically as opaque spheres. The size of the spheres may be correlated to a snowfall rate, and therefore a snowfall rate may be selected, wherein said snowfall rate determines the size and amount of the snow particles. The model may further obey the exclusion principle such that no two snow particles may intersect with each other. Thus, the sample of snow particles may be produced.

In step S4, an attribute for each LiDAR beam that is impacted by a snow particle may be modified, such as by using induced geometry.

In step S5, a partially synthetic snowy LiDAR data is generated, such as by augmenting the LiDAR point cloud data based on the simulated effect of snowfall. This may also include collating the LiDAR beam data that was previously modified. The collated LiDAR beam data may constitute a "training dataset."

In step S6, the generated partially synthetic point clouds that include snowfall simulation effects may be used as training data for optimizing 3D object detection methods in order to train the 3D object detection methods to better discriminate between snow particles and target objects in a real environment.

Further aspects of this method and may be described herein.

As discussed previously, a LiDAR point cloud dataset may include attributes of the recovered LiDAR beam that may be detected by the receiver Rx, such as the time delay $\tau$ of the captured echo and its corresponding power $P_R$. For extended objects, geometric optics can be applied to model the received power $P_R$ by using the formulation:

$$P_R(R) = C_A P_0 \rho_0 \frac{cos\,(\alpha_{in})}{R^2} \qquad \textbf{Eq. 1}$$

which holds for objects with a diameter larger than the beam diameter of the LiDAR beam with power $P_0$ at distance R and. Additional information may be needed, namely (i) the incident angle $\alpha_{in}$ and (ii) the system constant $C_A$ independent of range and time. Because the system constant $C_A$ may differ for each scanning layer due to different optics and beam divergences, a correction coefficient is typically applied to the received power $P_R$ that corresponds with the specific hardware that is used due to differences in optics and beam divergence.

Thus, pulse propagation in "free space", i.e., lacking scattering particles, may be modeled based on the discussed principles of geometrical optics in order to model the transmission of the LiDAR beams with power $P_0$ and the associated received power $P_R$ at the LiDAR system 103.

In order to prepare the LiDAR data for processing, the intensity calibration of the sensor may be inverted to obtain the raw intensity data. In snowfall, the optical medium contains particles which are smaller than the beam diameter, so Mie scattering and the exact spatial distribution of the particles are taken into account.

For each LiDAR beam, the set of snow particles that intersect with it may be computed, such as to derive the angle of the LiDAR beam cross-section that is reflected by each snow particle while taking potential occlusions into account.

Pulse propagation in the presence of scattering particles may be determined, such as by determining the modified impulse response of the linear system in the presence of snowfall, which allows the analytical calculation of the received power $P_R$ at the sensor. The range-dependent received power $P_R$ may be expressed as a time-wise convolution between the time-dependent transmitted signal power $P_T$ and the impulse response H of the optical system:

$$P_R(R) = C_A \int_0^{2R/c} P_T(t)\, H\left(R - \frac{ct}{2}\right) dt \qquad \textbf{Eq. 2}$$

with the time signature of the transmitted pulse given by:

$$P_T(t) = \begin{cases} P_0 \sin^2\left(\frac{\pi}{2\,\tau_H} t\right), & 0 \le t \le 2\,\tau_H \\ 0 & \text{otherwise} \end{cases} \qquad \textbf{Eq. 3}$$

wherein $\tau_H$ is the half-power pulse width. The impulse response H can be factored into the impulse responses of the optical channel, $H_C$, and the target, $H_T$:

$$H(R) = H_C(R)\, H_T(R) \qquad \textbf{Eq. 4}$$

$H_C$ depends on the beam divergence, the overlap of transmitter and receiver described by $\xi(R)$ as well as the transmittance $T(R)$ of the medium through:

$$H_C(R) = \frac{T^2(R)}{R^2}\xi(R) \qquad \textbf{Eq. 5}$$

The transmittance $T(R)$ is equal to 1 in the part of the medium that is not occupied by snow particles. The absence of further "scattering elements" may be assumed. The overlap $\xi(R)$ may be geometrically derived from the physical attributes of the LiDAR system, such as that shown in FIG. 1, as

$$\xi(R) = \begin{cases} 0, & R \le R_1 \\ \frac{R-R_1}{R_2-R_1}, & R_1 < R < R_2 \\ 1, & R_2 \le R \end{cases} \qquad \textbf{Eq. 6}$$

The impulse response of the target, $H_T$, enables the modelling of the model snow particles.
"Scene reflection" defines a particle interaction with the laser pulse by means of the impulse response $H_T$. For an extended solid target object, the following equation may be used:

$$H_T(R) = \rho_0 \delta(R - R_0) \qquad \textbf{Eq. 7}$$

with $\rho_0$ being the reflectivity of the object and $\delta$ the Dirac delta function. In snowfall, the laser beam is partially reflected by snow particles in addition to the solid target object.

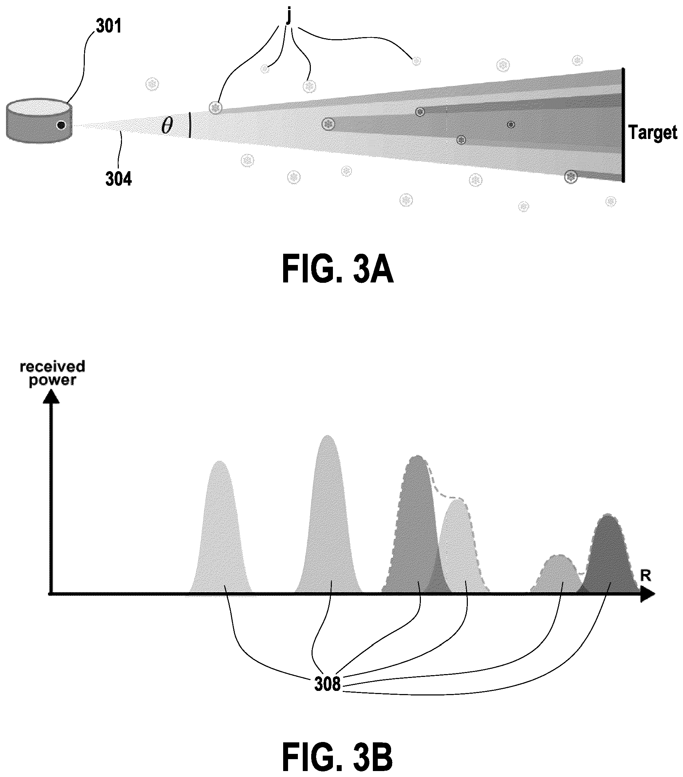

FIG. 3A shows a representation of the snow particles j relative to a LiDAR sensor 301. A snow particle j may be modeled as a spherical object with a reflectivity $\rho_s$, a diameter $D_j$ that is based upon a given distribution such that the snow particle j has an azimuth angle and distance $R_j$ relative the sensor. Each of the snow particles j may be placed, such as uniformly and/or at random, around the sensor. Each of the snow particles j may be placed so that no snow particle j "intersects," or shares physical space, with any other snow particle j or the sensor 301 itself. The number of snow particles that are placed may be determined by a desired snowfall rate, which may be generated, detected, or otherwise determined. For instance, a typical snowfall rate may include a range of 0-2.5 mm/h, although a higher rate is considered.
A representation of a single LiDAR beam 304 can be seen. The individual snow particles j may partially or fully block the path of the LiDAR beam j between the sensor 301 and the target object. Additionally, the individual snow particles j may partially or fully block the LiDAR beam with respect to each other. Thus, each particle j reflects only a fraction $\theta_j/\Theta$ of the opening angle $\Theta$ of the beam, also letting a fraction $\theta_0/\Theta$ of the beam reach the target.
Assuming $D_j \ll c\tau_H$ for all particles j, the following equation may be used:

$$H_T(R) = \frac{1}{\Theta}\left(\rho_0\theta_0\delta(R-R_0) + \rho_s \sum_{j=1}^{n} \theta_j\, \delta(R - R_j)\right) \qquad \textbf{Eq. 8}$$

with $\Theta = \theta_0 + \sum_{j=1}^{n} \theta_j$ .

When the results of Equation 3, Equation 4, Equation 5, and Equation 8 are entered into Equation 2, the received power $P_{R,snow}^{j}(R)$ in snowfall may be determined to be

$$P_{R,\text{snow}}(R) = P_{R,\text{snow}}^0(R) + \sum_{j=1}^n P_{R,\text{snow}}^j(R) \qquad \textbf{Eq. 9}$$

$$P_{R,\text{snow}}^j(R) = \frac{C_A P_0 \rho_s \theta_j \xi(R_j)}{\Theta R_j^2} \int_0^{2\tau_H} \sin^2\left(\frac{\pi}{2\tau_H} t\right) \delta\left(R - \frac{ct}{2} - R_0\right) dt$$

$$= \begin{cases} \frac{C_A P_0 \rho_s \theta_j \xi(R_j)}{\Theta R_j^2} \sin^2\left(\frac{\pi(R - R_j)}{c\tau_H}\right), & R_j \le R \le R_j + c\tau_H \\ 0 & \text{otherwise} \end{cases} \qquad \textbf{Eq. 10}$$

$P_{R,\text{snow}}^0(R)$ can be derived by substituting $(\theta_j, R_j, \rho_s)$ with $(\theta_0, R_0, \rho_0)$ in the right-hand side of Equation 10.

The received power $P_R$ is thus a superposition of multiple echoes 308, wherein each echo 308 is each associated with an object, such as a snow particle j or target object, as depicted in FIG. 3B. The magnitude of each echo 308 may depend on the azimuth angle $\theta_j$ and the inverse square of the distance $R_j$ of the respective object from the sensor 301. The maximum peak of the received power may be taken to be the LiDAR beam 304 return. Thus, if a peak that is present due to a snow particle j is higher than a peak associated with the target object, the true echo 308 is missed and a cluttered point is added to the simulated point cloud at the range of peak of the snow particle j. Otherwise, the target object intensity is attenuated according to its occlusion percentage.

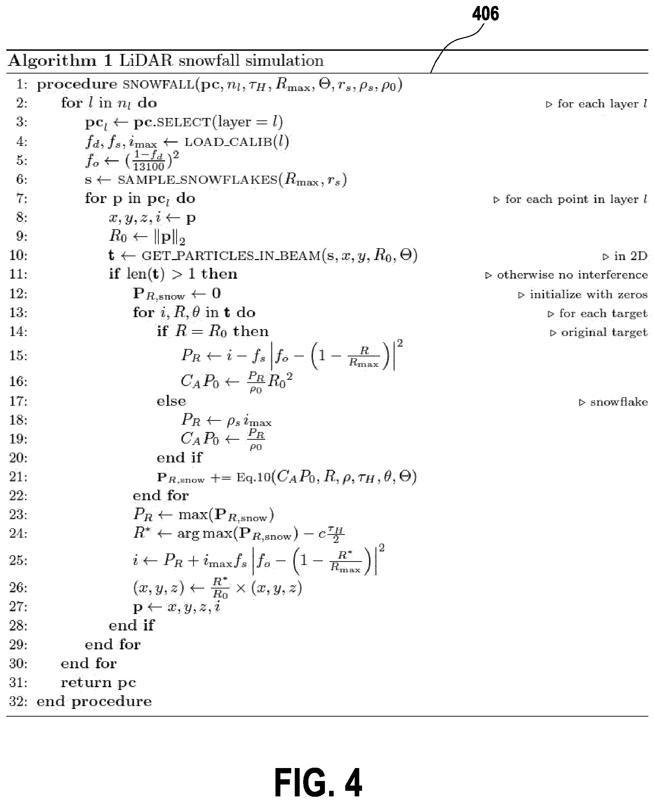

FIG. 4 demonstrates a schematic illustration of example code 406 for simulating snowfall for a LiDAR system, as described previously. The code is a "pseudo code" in that the logic of the code may be implemented within any number of programming languages.

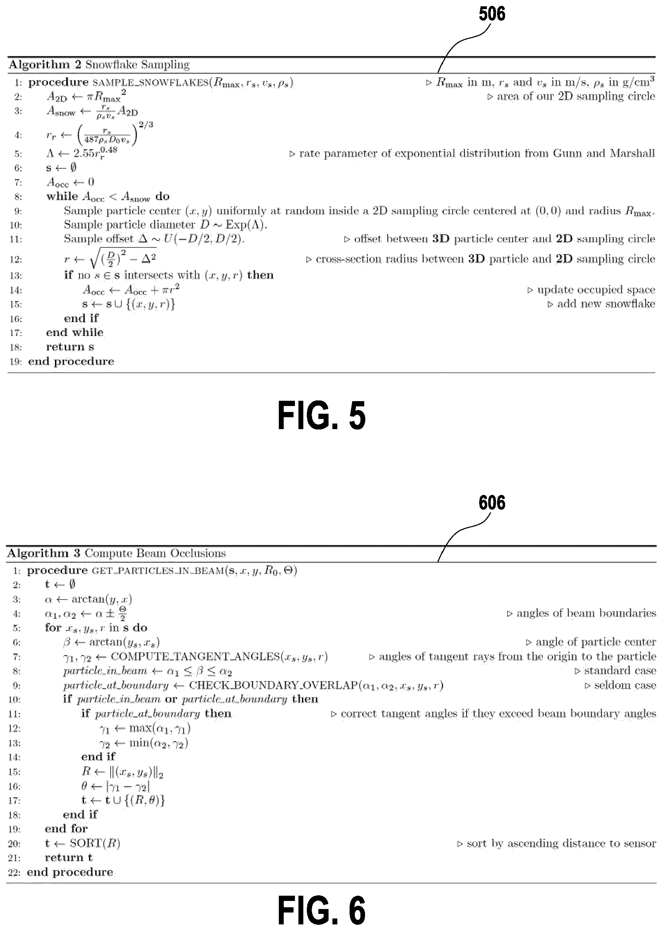

FIG. 5 demonstrates a schematic illustration of example code 506 for snowflake sampling, such as to simulate the effect of snowfall on the LiDAR point cloud data by sampling snow particles in 2D space for each scanning layer of the LiDAR sensor. The code is a "pseudo code" in that the logic of the code may be implemented within any number of programming languages.

FIG. 6 demonstrates a schematic illustration of example code 606 for computing LiDAR beam occlusions, such as by using induced geometry in order to compute for each LiDAR beam the set of particles that intersect with it and derive the angle of the beam cross-section that is reflected by each particle, taking occlusions into account in order to produce an impulse response of the linear system in the presence of snowfall that allows an analytical calculation of the received power at the receiver. The code is a "pseudo code" in that the logic of the code may be implemented within any number of programming languages.

Using the method previously described, a partially synthetic snowy LiDAR data is generated.

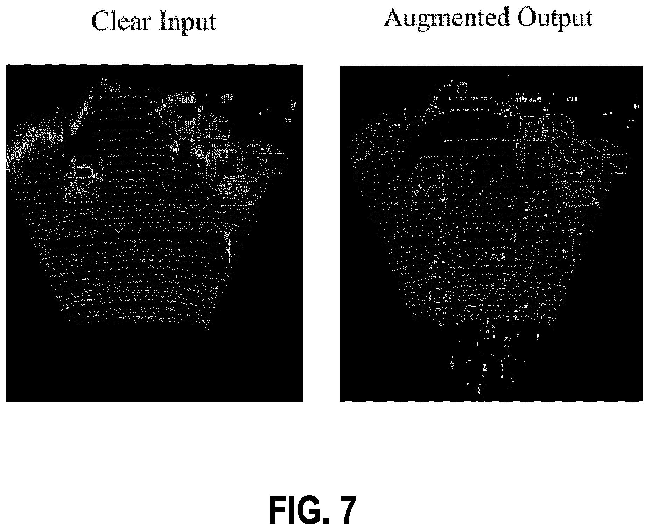

FIG. 7 demonstrates the output of the process described. In the drawing labeled "Clear Input," a 3D representation of the input, which may be clear weather LiDAR data from a real world environment, is displayed. In the drawing labeled "Augmented Output," a 3D representation of the output, which may be the clear weather LiDAR data that has been augmented to add the simulated snowfall as previously described, is displayed.

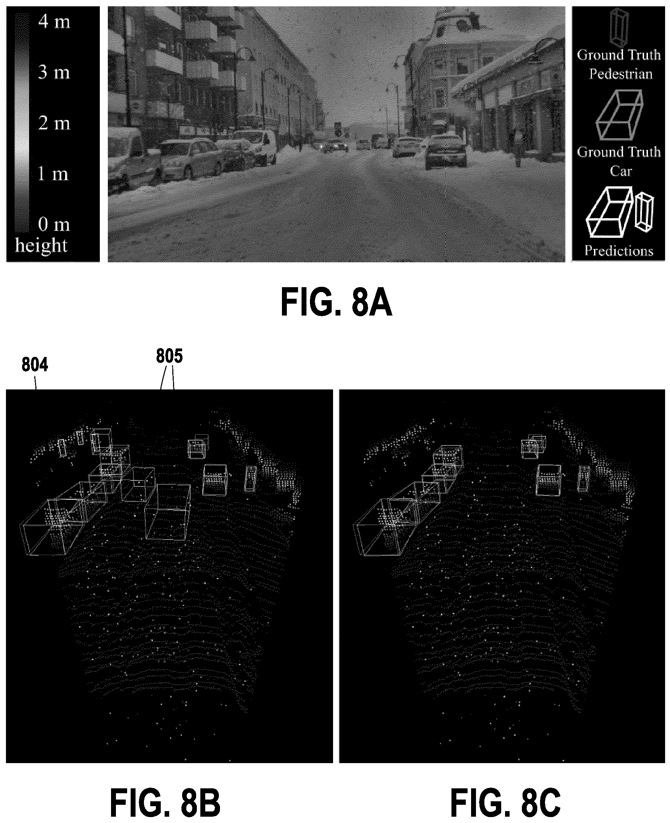

FIG. 8A shows a real world heavy snowfall scene. This may be a scene as viewed from a LiDAR system 103. FIG. 8B demonstrates the results of a conventional object detection model. As can be seen by comparing FIGS. 8A and 8B, the conventional object detection model is able to accurately detect objects from image, such as vehicle 804. However, it appears that due to interference from the snowfall, the object detection model has erroneously detected "ghost" objects 805 where this is clearly no object present. FIG. 8C represents the results of an object detection model that has been trained using as training dataset the partially synthetic snowy LiDAR data, such as that produced by the disclosed method. As can be seen, the object detection model in FIG. 8C is able to detect the "real" objects from FIG. 8A without erroneously detecting any ghost objects due to the effects of snowfall.

Aspects of the present disclosure may be implemented by or incorporate elements of a computer system. The computer system may comprise various hardware components including one or more single or multi-core processors collectively represented by processor, a solid-state drive, a memory, which may be a random-access memory or any other type of memory. Communication between the various components of the computer system may be enabled by one or more internal and/or external buses (e.g. a PCI bus, universal serial bus, IEEE 1394 "Firewire" bus, SCSI bus, Serial-ATA bus, etc.), to which the various hardware components are electronically coupled. The drive may store program instructions suitable for being loaded into the memory and executed by the processor. It is noted that the computer system may have additional and/or optional components, such as a network communication module for communication, via a communication network with other electronic devices and/or servers, localization modules, and the like.

The functions of the various computer elements, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

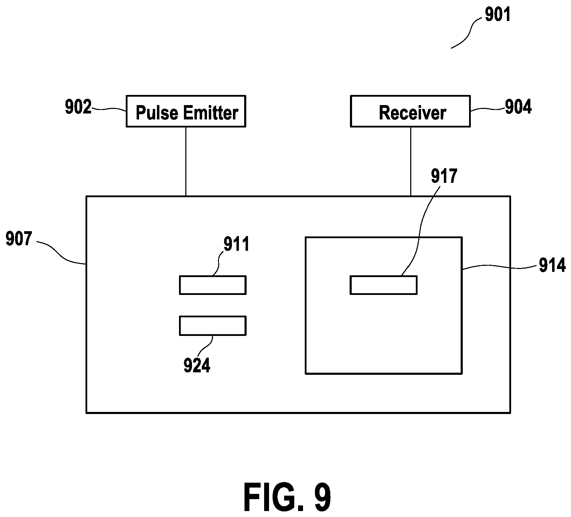

FIG. 9 demonstrates a system 901 for generating a partially synthetic snowy LiDAR dataset. The system 901 may include a pulse emitter 902, a receiver 904, and a controller 907. The pulse emitter 902 and receiver 904 may be similar to those previously discussed. The pulse emitter 902, receiver 904, and controller 907 may not necessarily be located proximately or temporally close. For instance, the controller 907 may receive data from the receiver 904 and/or pulse emitter 902 that was collected at a different location and/or a different time. Thus, the pulse emitter 902, receiver 904, and controller 907 do not need to be directly connected or concurrently operation.

The controller 907 may include a processing module 911 for obtaining the raw data from the receiver 904 and generating a LiDAR point cloud dataset. It is contemplated that the controller 904 may otherwise obtain the LiDAR point cloud dataset.

The controller 907 may include a simulation module 914 configured to simulate the effect of snowfall on the LiDAR point cloud data, such as by the method outlined previously. The simulation module 914 may include a snowfall module. The snowfall module 917 may be configured to simulate the effects of snowfall on each LiDAR beam of the LiDAR point cloud data. The controller 907 may be configured to output the augmented LiDAR point cloud data as partially synthetic snowy LiDAR data.

The controller 907 may include a training module 924 configured to use the partially synthetic snowy LiDAR data as a training dataset to train a 3D object detection model. Non-limiting examples of 3D object detection methods that may use the partially synthetic snowy LiDAR data as a training dataset are PV-RCNN, CenterPoint, Part-A$^2$, PointRCNN, SECOND, PointPillars, and VoxelRCNN-Car.

The foregoing description has been directed to specific embodiments of the present disclosure. It will be apparent, however, that other variations and modifications may be made to the described embodiments, as long as they fall within the scope of protection defined by the appended claims

**Claims**

1. A computer-implemented method for simulating the effect of snowfall on LiDAR point clouds for a LiDAR system comprising:

   - obtaining a LiDAR dataset containing LiDAR point cloud data for a clear weather environment that has been collected by a LiDAR system in a real environment (S1),
   - simulating the effect of snowfall on the LiDAR point cloud data (S2), and
   - augmenting the LiDAR point cloud data based on the simulated effect of snowfall to generate partially synthetic snowy LiDAR data (S5);

   wherein simulating the effect of snowfall on the LiDAR point cloud data comprises:

   - sampling snow particles in 2D space for each LiDAR beam of the dataset (S3), each snow particle reflecting only a fraction of an opening angle of the beam, also letting a fraction of the beam reach a target; and
   - an analytical calculation of a received power received by a sensor of the LiDAR system, such received power being a superposition of multiple echoes, wherein each echo is associated with one of the snow particles or the target.

2. The computer-implemented method of claim 1, wherein each echo comprises a magnitude that depends on an azimuth angle and the inverse square of the distance of the respective object from the sensor of the LiDAR system.

3. The computer-implemented method of any of claims 1 or 2, further comprising utilizing the partially synthetic snow LiDAR data as training data for optimizing 3D object detection methods in order to train the 3D object detection methods to better discriminate between snow particles and target objects in a real environment (S6).

4. The computer-implemented method of any of claims 1 to 3, wherein the snow particles are rendered as opaque spheres.

5. The computer-implemented method of any of claims 1 to 4, furthering comprising selecting a snowfall rate, wherein said snowfall rate determines the size and amount of the snow particles.

6. The computer-implemented method of any of claims 1 to 5, wherein the sampling is configured to obey the exclusion principle that no two snow particles intersect with each other.

7. A training dataset configured to be used for optimizing 3D object detection methods, produced by the method of any of claims 1 to 6.

8. A system (901) for generating a partially synthetic snowy LiDAR dataset, comprising one or more computer-readable media that store a program instruction and instruct a controller (907) to carry out a method of

- obtaining a LiDAR dataset containing LiDAR point cloud data for a clear weather environment that has been collected by a LiDAR system in a real environment,
- simulating the effect of snowfall on the LiDAR point cloud data, and
- augmenting the LiDAR point cloud data based on the simulated effect of snowfall to generate partially synthetic snowy LiDAR data;

wherein simulating the effect of snowfall on the LiDAR point cloud data comprises:

- sampling snow particles in 2D space for each LiDAR beam of the dataset (S3), each snow particle reflecting only a fraction of an opening angle of the beam, also letting a fraction of the beam reach a target; and
- an analytical calculation of a received power received by a sensor of the LiDAR system, such received power being a superposition of multiple echoes, wherein each echo is associated with one of the snow particles or the target.

9. The system (901) of claim 8, wherein each echo comprises a magnitude that depends on an azimuth angle and the inverse square of the distance of the respective object from the sensor of the LiDAR system.

10. The system (901) of claim 9, further comprising a pulse emitter (902) and a receiver (904), wherein the pulse emitter (902) is configured to emit a LiDAR beam and the receiver (904) is configured to detect a reflected LiDAR beam.

11. The system (901) of claim 10, further comprising that the controller (907) is configured to generate a LiDAR dataset containing real LiDAR point cloud data for a clear weather environment based on attributes of the reflections of the LiDAR beam.

12. The system (901) of claim 11, further comprising that the system (901) is configured to utilize the partially synthetic snow LiDAR data as training data for optimizing 3D object detection methods in order to train the 3D object detection methods to better discriminate between snow particles and target objects in a real environment.

13. The system (901) of any of claims 8 to 12, wherein the snow particles are rendered as opaque spheres.

**Patentansprüche**

1. Computerimplementiertes Verfahren zum Simulieren der Auswirkung von Schneefall auf LiDAR-Punktwolken für ein LiDAR-System, umfassend:

- Erlangen eines LiDAR-Datensatzes, der LiDAR-Punktwolkendaten für eine klare Wetterumgebung enthält, die von einem LiDAR-System in einer realen Umgebung erfasst wurden (S1),
- Simulieren der Auswirkung von Schneefall auf die LiDAR-Punktwolkendaten (S2), und
- Anreichern der LiDAR-Punktwolkendaten basierend auf der simulierten Auswirkung von Schneefall, um teilweise synthetische verschneite LiDAR-Daten zu erzeugen (S5);

wobei ein Simulieren der Auswirkung von Schneefall auf die LiDAR-Punktwolkendaten Folgendes umfasst:

- Abtasten von Schneepartikeln im 2D-Raum für jeden LiDAR-Strahl des Datensatzes (S3), wobei jedes Schneepartikel nur einen Bruchteil eines Öffnungswinkels des Strahls reflektiert und auch einen Bruchteil des Strahls ein Ziel erreichen lässt; und

- eine analytische Berechnung einer empfangenen Leistung, die von einem Sensor des LiDAR-Systems empfangen wird, wobei diese empfangene Leistung eine Überlagerung mehrerer Echos ist, wobei jedes Echo mit einem der Schneepartikel oder dem Ziel assoziiert ist.

2. Computerimplementiertes Verfahren nach Anspruch 1, wobei jedes Echo eine Größe umfasst, die von einem Azimutwinkel und dem inversen Quadrat des Abstands des jeweiligen Objekts von dem Sensor des LiDAR-Systems abhängt.

3. Computerimplementiertes Verfahren nach einem der Ansprüche 1 oder 2, ferner umfassend ein Verwenden der teilweise synthetischen Schnee-LiDAR-Daten als Trainingsdaten zum Optimieren von 3D-Objekterkennungsverfahren, um die 3D-Objekterkennungsverfahren zu trainieren, um in einer realen Umgebung besser zwischen Schneepartikeln und Zielobjekten zu unterscheiden (S6).

4. Computerimplementiertes Verfahren nach einem der Ansprüche 1 bis 3, wobei die Schneepartikel als undurchsichtige Kugeln gerendert werden.

5. Computerimplementiertes Verfahren nach einem der Ansprüche 1 bis 4, ferner umfassend ein Auswählen einer Schneefallrate umfasst, wobei die Schneefallrate die Größe und Menge der Schneepartikel bestimmt.

6. Computerimplementiertes Verfahren nach einem der Ansprüche 1 bis 5, wobei das Abtasten konfiguriert ist, um dem Ausschlussprinzip zu folgen, dass sich keine zwei Schneepartikel überschneiden.

7. Trainingsdatensatz, der konfiguriert ist, um zum Optimieren von 3D-Objekterkennungsverfahren verwendet zu werden, der durch das Verfahren nach einem der Ansprüche 1 bis 6 erzeugt wird.

8. System (901) zum Erzeugen eines teilweise synthetischen verschneiten LiDAR-Datensatzes, umfassend ein oder mehrere computerlesbare Medien, die eine Programmanweisung speichern und eine Steuerung (907) anweisen, ein Verfahren zu Folgendem durchzuführen

- Erlangen eines LiDAR-Datensatzes, der LiDAR-Punktwolkendaten für eine klare Wetterumgebung enthält, die von einem LiDAR-System in einer realen Umgebung erfasst wurden,
- Simulieren der Auswirkung von Schneefall auf die LiDAR-Punktwolkendaten, und
- Anreichern der LiDAR-Punktwolkendaten basierend auf der simulierten Auswirkung von Schneefall, um teilweise synthetische verschneite LiDAR-Daten zu erzeugen;

wobei ein Simulieren der Auswirkung von Schneefall auf die LiDAR-Punktwolkendaten Folgendes umfasst:

- Abtasten von Schneepartikeln im 2D-Raum für jeden LiDAR-Strahl des Datensatzes (S3), wobei jedes Schneepartikel nur einen Bruchteil eines Öffnungswinkels des Strahls reflektiert und auch einen Bruchteil des Strahls ein Ziel erreichen lässt; und
- eine analytische Berechnung einer empfangenen Leistung, die von einem Sensor des LiDAR-Systems empfangen wird, wobei diese empfangene Leistung eine Überlagerung mehrerer Echos ist, wobei jedes Echo mit einem der Schneepartikel oder dem Ziel assoziiert ist.

9. System (901) nach Anspruch 8, wobei jedes Echo eine Größe umfasst, die von einem Azimutwinkel und dem inversen Quadrat des Abstands des jeweiligen Objekts von dem Sensor des LiDAR-Systems abhängt.

10. System (901) nach Anspruch 9, ferner umfassend einen Impulssender (902) und einen Empfänger (904), wobei der Impulssender (902) konfiguriert ist, um einen LiDAR-Strahl zu emittieren, und der Empfänger (904) konfiguriert ist, um einen reflektierten LiDAR-Strahl zu erfassen.

11. System (901) nach Anspruch 10, ferner umfassend, dass die Steuerung (907) konfiguriert ist, um einen LiDAR-Datensatz zu erzeugen, der reale LiDAR-Punktwolkendaten für eine klare Wetterumgebung basierend auf von Attributen der Reflexionen des LiDAR-Strahls enthält.

**12.** System (901) nach Anspruch 11, ferner umfassend, dass das System (901) konfiguriert ist, um die teilweise synthetischen Schnee-LiDAR-Daten als Trainingsdaten zum Optimieren von Objekterkennungsverfahren zu verwenden, um die 3D-Objekterkennungsverfahren zu trainieren, um in einer realen Umgebung besser zwischen Schneepartikeln und Zielobjekten zu unterscheiden.

**13.** System (901) nach einem der Ansprüche 8 bis 12, wobei die Schneepartikel als undurchsichtige Kugeln gerendert werden.


**Revendications**

**1.** Procédé mis en œuvre par ordinateur pour simuler l'effet de chutes de neige sur des nuages de points de capteur LiDAR pour un système LiDAR comprenant :

- l'obtention d'un ensemble de données de capteur LiDAR contenant des données de nuage de points de capteur LiDAR pour un environnement de temps clair qui ont été collectées par un système LiDAR dans un environnement réel (S1),
- la simulation de l'effet de chutes de neige sur les données de nuage de points de capteur LiDAR (S2), et
- l'augmentation des données de nuage de points de capteur LiDAR sur la base de l'effet simulé de chutes de neige pour générer des données de capteur LiDAR neigeuses partiellement synthétiques (S5) ;

la simulation de l'effet de chutes de neige sur les données de nuage de points de capteur LiDAR comprenant :

- l'échantillonnage de particules de neige dans un espace 2D pour chaque faisceau LiDAR de l'ensemble de données (S3), chaque particule de neige réfléchissant seulement une fraction d'un angle d'ouverture du faisceau, en laissant également une fraction du faisceau atteindre une cible ; et
- un calcul analytique d'une énergie reçue qui est reçue par un capteur du système LiDAR, cette énergie reçue étant une superposition de multiples échos, chaque écho étant associé à l'une des particules de neige ou de la cible.

**2.** Procédé mis en œuvre par ordinateur selon la revendication 1, selon lequel chaque écho comprend une grandeur qui dépend d'un angle d'azimut et du carré inverse de la distance de l'objet respectif par rapport au capteur du système LiDAR.

**3.** Procédé mis en œuvre par ordinateur selon l'une quelconque des revendications 1 ou 2, comprenant en outre l'utilisation des données de capteur LiDAR de neige partiellement synthétiques en tant que données d'entraînement pour optimiser des procédés de détection d'objet 3D afin d'entraîner les procédés de détection d'objet 3D pour mieux discriminer les particules de neige et les objets de cible dans un environnement réel (S6).

**4.** Procédé mis en œuvre par ordinateur selon l'une quelconque des revendications 1 à 3, selon lequel les particules de neige sont rendues sous forme de sphères opaques.

**5.** Procédé mis en œuvre par ordinateur selon l'une quelconque des revendications 1 à 4, comprenant en outre la sélection d'un taux de chutes de neige, ledit taux de chutes de neige déterminant la taille et la quantité des particules de neige.

**6.** Procédé mis en œuvre par ordinateur selon l'une quelconque des revendications 1 à 5, selon lequel l'échantillonnage est configuré pour obéir au principe d'exclusion que deux particules de neige ne se croisent pas l'une l'autre.

**7.** Ensemble de données d'entraînement configuré pour être utilisé pour optimiser des procédés de détection d'objet 3D, produit par le procédé selon l'une quelconque des revendications 1 à 6.

**8.** Système (901) destiné à générer un ensemble de données de capteur LiDAR neigeuses partiellement synthétiques, comprenant un ou plusieurs supports lisibles par ordinateur qui stockent une instruction de programme et demandent à un circuit de commande (907) de mettre en œuvre un procédé de

- obtention d'un ensemble de données de capteur LiDAR contenant des données de nuage de points de capteur LiDAR pour un environnement de temps clair qui ont été collectées par un système LiDAR dans un environnement réel,
- simulation de l'effet de chutes de neige sur les données de nuage de points de capteur LiDAR, et
- augmentation des données de nuage de points de capteur LiDAR sur la base de l'effet simulé de chutes de neige pour générer des données de capteur LiDAR neigeuses partiellement synthétiques ;

la simulation de l'effet de chutes de neige sur les données de nuage de points de capteur LiDAR comprenant :

- l'échantillonnage de particules de neige dans un espace 2D pour chaque faisceau LiDAR de l'ensemble de données (S3), chaque particule de neige réfléchissant seulement une fraction d'un angle d'ouverture du faisceau, en laissant également une fraction du faisceau atteindre une cible ; et
- un calcul analytique d'une énergie reçue qui est reçue par un capteur du système LiDAR, cette énergie reçue étant une superposition de multiples échos, chaque écho étant associé à l'une des particules de neige ou de la cible.

9. Système (901) selon la revendication 8, dans lequel chaque écho comprend une grandeur qui dépend d'un angle d'azimut et du carré inverse de la distance de l'objet respectif par rapport au capteur du système LiDAR.

10. Système (901) selon la revendication 9, comprenant en outre un émetteur d'impulsion (902) et un récepteur (904), l'émetteur d'impulsion (902) étant configuré pour émettre un faisceau LiDAR et le récepteur (904) étant configuré pour détecter un faisceau LiDAR réfléchi.

11. Système (901) selon la revendication 10, comprenant en outre le fait que le circuit de commande (907) est configuré pour générer un ensemble de données de capteur LiDAR contenant des données de nuage de points de capteur LiDAR réelles pour un environnement de temps clair sur la base d'attributs des réflexions du faisceau LiDAR.

12. Système (901) selon la revendication 11, comprenant en outre le fait que le système (901) est configuré pour utiliser les données de capteur LiDAR de neige partiellement synthétiques en tant que données d'entraînement pour optimiser des procédés de détection d'objet 3D afin d'entraîner les procédés de détection d'objet 3D pour mieux discriminer les particules de neige et les objets de cible dans un environnement réel.

13. Système (901) selon l'une quelconque des revendications 8 à 12, dans lequel les particules de neige sont rendues sous forme de sphères opaques.

# FIG. 1

# FIG. 2

**FIG. 3A**

**FIG. 3B**

406

**Algorithm 1** LiDAR snowfall simulation

1: **procedure** SNOWFALL$(\mathbf{pc}, n_l, \tau_H, R_{\max}, \Theta, r_s, \rho_s, \rho_0)$
2:    **for** $l$ in $n_l$ **do**                                             $\triangleright$ for each layer $l$
3:       $\mathbf{pc}_l \leftarrow \mathbf{pc}.\text{SELECT}(\text{layer} = l)$
4:       $f_d, f_s, i_{\max} \leftarrow \text{LOAD\_CALIB}(l)$
5:       $f_o \leftarrow \left(\frac{1 - f_d}{13100}\right)^2$
6:       $\mathbf{s} \leftarrow \text{SAMPLE\_SNOWFLAKES}(R_{\max}, r_s)$
7:       **for** p in $\mathbf{pc}_l$ **do**                                 $\triangleright$ for each point in layer $l$
8:          $x, y, z, i \leftarrow \mathbf{p}$
9:          $R_0 \leftarrow \|\mathbf{p}\|_2$
10:         $\mathbf{t} \leftarrow \text{GET\_PARTICLES\_IN\_BEAM}(\mathbf{s}, x, y, R_0, \Theta)$         $\triangleright$ in 2D
11:         **if** $\text{len}(\mathbf{t}) > 1$ **then**           $\triangleright$ otherwise no interference
12:            $\mathbf{P}_{R,\text{snow}} \leftarrow 0$             $\triangleright$ initialize with zeros
13:            **for** $i, R, \theta$ in $\mathbf{t}$ **do**          $\triangleright$ for each target
14:               **if** $R = R_0$ **then**         $\triangleright$ original target
15:                 $P_R \leftarrow i - f_s \left| f_o - \left(1 - \frac{R}{R_{\max}}\right) \right|^2$
16:                 $C_A P_0 \leftarrow \frac{P_R}{\rho_0} R_0^{\,2}$
17:              **else**                       $\triangleright$ snowflake
18:                 $P_R \leftarrow \rho_s\, i_{\max}$
19:                 $C_A P_0 \leftarrow \frac{P_R}{\rho_0}$
20:              **end if**
21:              $\mathbf{P}_{R,\text{snow}} \mathrel{+}= \text{Eq.10}(C_A P_0, R, \rho, \tau_H, \theta, \Theta)$
22:            **end for**
23:            $P_R \leftarrow \max(\mathbf{P}_{R,\text{snow}})$
24:            $R^* \leftarrow \arg\max(\mathbf{P}_{R,\text{snow}}) - c\frac{\tau_H}{2}$
25:            $i \leftarrow P_R + i_{\max} f_s \left| f_o - \left(1 - \frac{R^*}{R_{\max}}\right) \right|^2$
26:            $(x, y, z) \leftarrow \frac{R^*}{R_0} \times (x, y, z)$
27:            $\mathbf{p} \leftarrow x, y, z, i$
28:         **end if**
29:       **end for**
30:    **end for**
31:    **return pc**
32: **end procedure**

# FIG. 4

**506**

---
**Algorithm 2** Snowflake Sampling
---

```
 1: procedure SAMPLE_SNOWFLAKES(R_max, r_s, v_s, ρ_s)          ▷ R_max in m, r_s and v_s in m/s, ρ_s in g/cm³
 2:     A_2D ← πR_max²                                                        ▷ area of our 2D sampling circle
 3:     A_snow ← (r_s)/(ρ_s v_s) A_2D
 4:     r_r ← ( r_s / (487 ρ_x D_0 v_s) )^(2/3)
 5:     Λ ← 2.55 r_r^0.48                         ▷ rate parameter of exponential distribution from Gunn and Marshall
 6:     s ← ∅
 7:     A_occ ← 0
 8:     while A_occ < A_snow do
 9:         Sample particle center (x, y) uniformly at random inside a 2D sampling circle centered at (0,0) and radius R_max.
10:         Sample particle diameter D ∼ Exp(Λ).
11:         Sample offset Δ ∼ U(−D/2, D/2).                  ▷ offset between 3D particle center and 2D sampling circle
12:         r ← √((D/2)² − Δ²)                 ▷ cross-section radius between 3D particle and 2D sampling circle
13:         if no s ∈ s intersects with (x, y, r) then
14:             A_occ ← A_occ + πr²                                               ▷ update occupied space
15:             s ← s ∪ {(x, y, r)}                                                ▷ add new snowflake
16:         end if
17:     end while
18:     return s
19: end procedure
```

# FIG. 5

**606**

---
**Algorithm 3** Compute Beam Occlusions
---

```
 1: procedure GET_PARTICLES_IN_BEAM(s, x, y, R_0, Θ)
 2:     t ← ∅
 3:     α ← arctan(y, x)
 4:     α_1, α_2 ← α ± Θ/2                                                         ▷ angles of beam boundaries
 5:     for x_s, y_s, r in s do
 6:         β ← arctan(y_s, x_s)                                                  ▷ angle of particle center
 7:         γ_1, γ_2 ← COMPUTE_TANGENT_ANGLES(x_s, y_s, r)     ▷ angles of tangent rays from the origin to the particle
 8:         particle_in_beam ← α_1 ≤ β ≤ α_2                                          ▷ standard case
 9:         particle_at_boundary ← CHECK_BOUNDARY_OVERLAP(α_1, α_2, x_s, y_s, r)        ▷ seldom case
10:         if particle_in_beam or particle_at_boundary then
11:             if particle_at_boundary then          ▷ correct tangent angles if they exceed beam boundary angles
12:                 γ_1 ← max(α_1, γ_1)
13:                 γ_2 ← min(α_2, γ_2)
14:             end if
15:             R ← ‖(x_s, y_s)‖_2
16:             θ ← |γ_1 − γ_2|
17:             t ← t ∪ {(R, θ)}
18:         end if
19:     end for
20:     t ← SORT(R)                                                       ▷ sort by ascending distance to sensor
21:     return t
22: end procedure
```

# FIG. 6

Clear Input          Augmented Output

FIG. 7

**FIG. 8A**

**FIG. 8B**

**FIG. 8C**

901

902 — Pulse Emitter                Receiver — 904

917

907                911                914

924

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018275658 A
- US 2021339738 A

- CN 112163280 A

**Non-patent literature cited in the description**

- **KILIC, VELAT ; HEGDE, DEEPTI ; SINDAGI, VISHWANATH et al.** Lidar light scattering augmentation (LISA): Physics-based simulation of adverse weather conditions for 3D object detection. *arXiv:2107.07004*, 2021

- Using physics-based M&S for training and testing machine learning algorithms. **CARRILLO, JUSTIN ; GATES, BURHMAN ; MONROE, GABE et al.** International Conference on Modelling and Simulation for Autonomous Systems. Springer, 2018, 445-455